# EUROPÄISCHE PATENTSCHRIFT

(11) **EP 1 290 771 B1**
(45) Veröffentlichungstag und Bekanntmachung des Hinweises auf die Patenterteilung: **31.03.2004**
(21) Anmeldenummer: 01937845.4
(22) Anmeldetag: 30.05.2001
(51) Int. Cl.: H02J 9/06, H02J 7/34

(54) **PUFFERSCHALTUNG**
BUFFER CIRCUIT
CIRCUIT TAMPON

(30) Priorität: 31.05.2000 AT 9652000
(43) Veröffentlichungstag der Anmeldung: 12.03.2003
(73) Patentinhaber: Siemens AG Österreich, 1210 Wien (AT)
(72) Erfinder: KRANISTER, Andreas, A-3150 Wilhelmsburg (AT); WEINMEIER, Harald, A-1210 Wien (AT)
(74) Vertreter: Matschnig, Franz, Dipl.-Ing.
(86) Internationale Anmeldenummer: PCT/AT2001/000174
(87) Internationale Veröffentlichungsnummer: WO 2001/093404

(56) Entgegenhaltungen:
- EP-A- 0 183 597
- GB-A- 2 334 634
- US-A- 5 862 046

## Beschreibung

Die Erfindung bezieht sich auf eine Pufferschaltung für eine von der Versorgungsgleichspannung zu speisende Last, mit einem Pufferkondensator, der von einer Ladeschaltung auf eine Spannung aufladbar ist, die höher als die Versorgungsgleichspannung ist, und der bei Einbrüchen der Versorgungsspannung über eine Entladeschaltung zur Versorgung der Last heranziehbar ist.

Pufferschaltungen werden zur Pufferung einer Versorgungsgleichspannung verwendet, um bei Spannungseinbrüchen z. B. der Netzspannung, Geräte vorübergehend weiterbetreiben zu können. Dies ist z. B. bei elektronischen Geräten wichtig, um Datenverluste zu vermeiden, ohne zu der sehr teuren Lösung unterbrechungsfreier Stromversorgungen, die von Akkumulatoren gespeist sind, greifen zu müssen.

Aus der DD 223 302 A1 geht eine Pufferschaltung der gegenständlichen Art hervor, wobei eine zusätzliche Wicklung des Übertragers eines Schaltnetzteils mit nachgeschalteter Gleichrichtung zum Laden des Pufferkondensators verwendet wird, wobei bei Netzausfall eine Rückspeisung auf die Primärseite erfolgt. Eine nachträgliche Installation der hier enthaltenen Pufferschaltung zu einem vorhandenen Netzgerät ist aufgrund des verschiedenen Konzepts nicht möglich.

Die EP 0 315 830 A1 beschreibt eine Kondensatorpufferung für ein elektronisches Gerät bei welchem ein Pufferkondensator auf eine vorhandene Eingangsgleichspannung aufgeladen wird, diese Spannung jedoch zur Speisung des Geräts mittels einer Stabilisierungsschaltung reduziert wird. Hier wird somit das Vorhandensein einer Gleichspannung vorausgesetzt, die höher als die Betriebsspannung des Gerätes ist. Im Normalbetrieb ist der Wirkungsgrad der Schaltung ebenso wie im Pufferbetrieb ungünstig, da ein beträchtlicher Teil der Leistung in einem Längsregler verloren geht.

Ein bei allen Pufferschaltungen der gegenständlichen Art auftretendes Problem ist die im Vergleich zu Akkumulatoren geringe Energie, die in einem Kondensator gespeichert werden kann, wobei diese Energie direkt proportional der Kapazität, jedoch quadratisch mit der Ladespannung steigt. Will man Kosten und Volumen sparen, so empfiehlt sich naturgemäß eine Vergrößerung der Pufferenergie durch Steigerung der Kondensatorspannung.

Bei Pufferschaltungen der gegenständlichen Art kann die Ladeschaltung ein oder mehr Spannungsverdoppler mit Dioden und Kondensatoren aufweisen, um eine höhere Kondensatorspannung zu erreichen oder - wie dies in einer zur vorliegenden Anmeldung zeitranggleichen Anmeldung der Anmelderin vorgeschlagen wird - einen Hochsetzsteller als Ladeschaltung und einen Tiefsetzsteller als Entladeschaltung. Eine solche Pufferschaltung bietet nicht nur die Vorteile geringer Kosten und minimalen Bauvolumens bei maximaler Speicherenergie, sondern sie lässt sich auch in ein externes Gerät auslagern, das als Zusatz einer bereits vorhandenen Stromversorgung verwendbar ist.

Im Pufferbetrieb liefert eine solche Schaltung eine Ausgangsspannung, die auf die nominale Versorgungsgleichspannung z. B. 24 Volt, eingestellt ist bzw. geregelt wird. Damit an der Last die vorgesehene Spannung tatsächlich zur Verfügung steht, muss bei höheren Strömen und nicht vernachlässigbaren Leitungswiderständen, z. B. einem längeren Kabel zwischen Stromversorgung und Last die Versorgungsgleichspannung auf einen höheren Wert eingestellt werden. Falls beispielsweise ein Spannungsabfall von 3 Volt an der Lastzuleitung auftritt und der zulässige Betriebsspannungsbereich der Last 22 bis 24 Volt beträgt, wird der Ausgang der Spannungsversorgung auf 26 Volt eingestellt, um an der Last 23 Volt aufrecht zu erhalten. Wäre die Pufferschaltung auf die Nominalschaltung von 24 Volt eingestellt, ergäbe sich bei Netzausfall wegen des genannten Spannungsabfalls an der Last eine Spannung von lediglich 21 Volt, die unterhalb des zulässigen Betriebsspannungsbereiches liegt und die Pufferschaltung wäre wirkungslos.

Eine Aufgabe der Erfindung liegt daher darin, eine Pufferschaltung zu schaffen, die sich automatisch an die Versorgungsspannung anpasst.

Diese Aufgabe wird mit einer Pufferschaltung der eingangs genannten Art gelöst, bei welcher erfindungsgemäß der Eingang eines Tiefsetzstellers, an dem Pufferkondensator und sein Ausgang an der Last liegt, der Tiefsetzsteller über eine Ansteuerschaltung steuerbar ist, die einen Speicher zur verzögerten Speicherung des Wertes der Versorgungsspannung sowie zumindest einen Komparator zum Vergleich der augenblicklichen Versorgungsspannung mit deren verzögert abgespeichertem Wert aufweist, und die dazu eingerichtet ist, bei Absinken der augenblicklichen Versorgungsspannung um eine vorgebbare Differenz unter den abgespeicherten Wert ein Ansteuersignal an den Tiefsetzsteller abzugeben, um den Pufferbetrieb einzuleiten

Die Erfindung schafft eine in weitem Bereich einsetzbare Pufferschaltung, die nachträglich mit Hilfe einer Zweidraht-Leitung installiert werden kann und für einen größeren Spannungsbereich ohne weitere Einstellungen einsetzbar ist, da als Referenz für die Regelung der Ausgangsspannung des Tiefsetzstellers nicht ein fester Wert sondern die zuletzt aktuelle Versorgungsspannung dient.

Bei einer zweckmäßigen und einfach realisierbaren Variante ist das Ansteuersignal auch Regelsignal für einen Pulsweitenmodulator des Tiefsetzstellers.

Es ist weiters empfehlenswert, wenn bei Aktivierung des Pufferbetriebes der in dem Speicher gespeicherte Wert unabhängig von der Versorgungsspannung gehalten wird.

Bei einer einfachen aber praxisgerechten Variante ist vorgesehen, dass der Speicher als über einen Widerstand von der Versorgungsspannung aufladbaren Kondensator ausgebildet ist. Dabei ist es mit Vorteil möglich, dass der Kondensator über einen von einem ersten Komparator gesteuerten Schalter aufladbar ist, welcher bei Aktivierung des Pufferbetriebes öffnet.

In anderen Fällen kann aber auch vorgesehen sein, dass der Speicher ein digitaler Speicher ist.

Da es unerwünscht ist, den Pufferbetrieb undefiniert lange einzusetzen, insbesondere bis zu einem unkontrollierten Zusammenbruch des Tiefsetzstellers, kann es empfehlenswert sein, wenn ein Zeitglied vorgesehen ist, welches den Pufferbetrieb auf eine vorgebbare Zeitdauer begrenzt. Dabei bietet sich als einfache Lösung an, dass das Zeitglied als dem Ausgang des ersten Komparators nachgeordneter Monoflop ausgebildet ist.

Andererseits kann man ein definiertes Beenden des Pufferbetriebes dadurch erreichen, dass die Ansteuerschaltung zur Erfassung der Spannung an dem Pufferkondensator eingerichtet ist, sowie dazu, bei Abfall dieser Spannung auf einen vorgebbaren Grenzwert den Pufferbetrieb zu beenden.

Eine zweckmäßige Variante sieht vor, dass die Ausgangsspannung des Tiefsetzstellers auf einen Wert regelbar ist, der geringfügig unter dem abgespeicherten Wert der Versorgungsspannung liegt. Auf diese einfache Weise kann ein Beenden des Pufferbetriebes bei Wiederkehr der eigentlichen Versorgungsspannung ermöglicht werden.

Die Erfindung samt weiterer Vorteile ist im folgenden anhand einer beispielsweisen Ausführungsform unter Bezugnahme auf die Zeichnung näher erläutert In dieser zeigen
- Fig. 1 eine Pufferschaltung nach der Erfindung in einem vereinfachten Blockschaltbild und
- Fig. 2 eine mögliche Ausführungsform der in Fig. 1 lediglich als Block gezeigten Ansteuerschaltung im Detail.

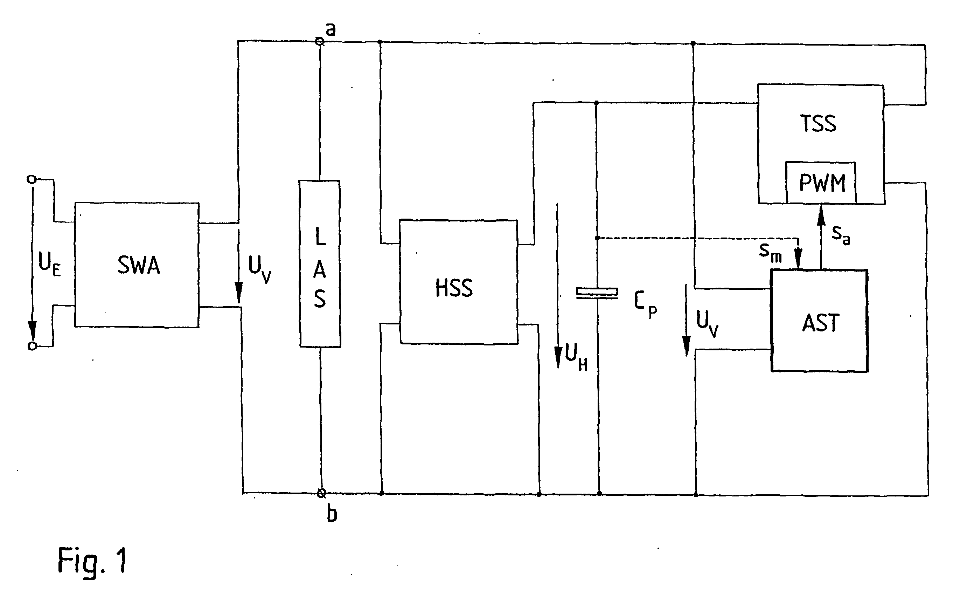

Wie aus Fig. 1 ersichtlich, wird eine Eingangsspannung U_{E}, z. B. Netzwechselspannung von 230 Volt, in einem Schaltwandler SWA in eine Versorgungsgleichspannung U_{V}, z. B. 24 Volt, gewandelt, die an die Klemmen einer Last LAS angeschlossen ist. Die Last LAS kann prinzipiell ein beliebiger Verbraucher sein, doch ist im Rahmen der Erfindung vor allem an ausfallskritische Geräte gedacht.

An die Lastklemmen ist ein Hochsetzsteller HSS mit seinem Eingang angeschlossen, wogegen am Ausgang des Hochsetzstellers ein Pufferkondensator Cp liegt. Am Eingang des Hochsetzstellers HSS liegt somit die Lastspannung, die bei ordnungsgemäß arbeitendem Schaltwandler SWA dessen Ausgangsspannung, d. h. der Versorgungsgleichspannung U_{V} entspricht.

Hochsetzsteller sind dem Fachmann in einer Vielzahl von Ausführungen bekannt. Es handelt sich um Schaltwandler, die einer erste Gleichspannung, hier U_{V}, in eine zweite Gleichspannung wandeln, die größer als die erste Spannung ist. Die zweite Gleichspannung ist im vorliegenden Fall die Spannung U_{H} an dem Pufferkondensator Cp. Beträgt beispielsweise die Versorgungsspannung 24 Volt und wird diese auf die Spannung U_{H} = 100 Volt hochgesetzt, so beträgt die Energie E des auf 100 Volt geladenen Kondensators Cp E₁₀₀ = 10⁴Cp/2. Ohne Hochsetzsteller könnte der Kondensator Cp nur auf 24 V geladen werden, was einer Energie von E₂₄ = 288 Cp entspräche. Die Energiewerte unterscheiden sich somit um einen Faktor von ca. 35.

Bei einer vereinfachten Ausführungsform kann der Pufferkondensator auch über einen Ladewiderstand von einer Spannung aufgeladen werden, die höher ist als die Versorgungsspannung. Dies kann insbesondere der Fall sein, falls eine solche höhere Spannung, welche eigentlich einem anderen Zweck dient, an einem Schaltwandlerausgang vorhanden ist, oder falls man die höhere Gleichspannung aus einer Wechselspannung durch eine einfache Spannungsverdopplungsschaltung z. B. mit zwei Dioden und Kondensatoren gewinnen kann.

Die Spannung U_{H} des Pufferkondensators Cp liegt an dem Eingang eines Tiefsetzstellers TSS, dessen Ausgang an den Lastklemmen a, b liegt, und dessen Aufgabe es ist, im Bedarfsfall die Spannung U_{H} an dem Pufferkondensator Cp auf die Spannung U_{V}, d. h. die benötigte Lastspannung zu wandeln. Auch Tiefsetzsteller sind dem Fachmann in vielfältigen Varianten bekannt. Sie sollen eine erste Gleichspannung, hier U_{H} auf eine niedrigere, zweite Gleichspannung herabsetzen, hier auf U_{V}.

Eine Ansteuerschaltung AST überwacht die Lastspannung U_{V} durch Vergleich mit einer Referenzspannung und ist dazu eingerichtet, dem Tiefsetzsteller TSS ein Ansteuersignal sₐ zuzuführen, sobald die Lastspannung U_{V} auf einen bestimmten Wert, z. B. 0,9 U_{V} absinkt. Die Ansteuerschaltung AST kann beispielsweise die für den Betrieb des Tiefsetzstellers TSS erforderlichen Schaltimpulse erzeugen; wobei das Ansteuersignal sₐ eine Impulsfolge mit einem bestimmten Tastverhältnis ist. Andererseits können - wie in diesem Fall - die Schaltimpulse auch in dem Tiefsetzsteller TSS selbst in einem Pulsweitenmodulator PWM erzeugt und ihr Tastverhältnis kann durch das Ansteuersignal sₐ bestimmt werden.

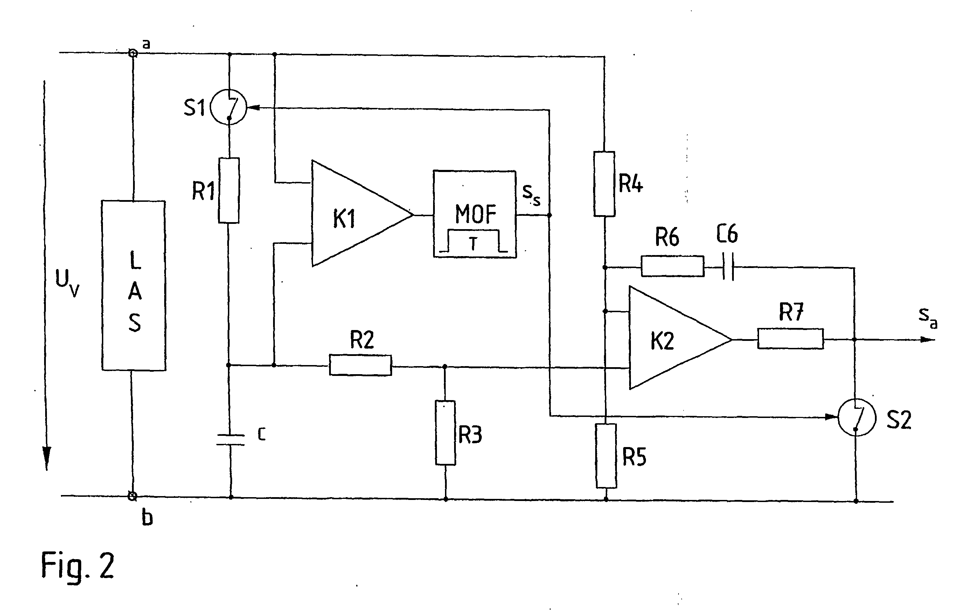

Gemäß Fig. 2 wird die aktuelle Versorgungsspannung an der Last LAS einem Kondensator C, der als Speicher für den Spannungswert dient, über einen gesteuerten Schalter S1 und einen Widerstand R1 zugeführt. An dem Kondensator C liegt somit im stationären Zustand die tatsächliche Lastspannung und sie bleibt im wesentlichen erhalten, auch wenn die Ausgangsspannung des Schaltwandlers SWA zusammenbricht. Dabei muss natürlich die Entladungszeitkonstante, die z. B. hier durch die Widerstände R2 + R3 mit bestimmt ist, groß genug sein. In der Praxis wird die dem Kondensator C zugeführte Spannung allerdings oft durch einen vorgeschalteten Spannungsteiler nur einen Teil der Spannung an der Last betragen.

Die in dem Kondensator C verzögert gespeicherte Spannung wird in einem Komparator K1 mit der augenblicklichen Spannung an der Last bzw. an den Lastklemmen a, b verglichen. Sinkt bei einer Störung die z. B. von dem Schaltwandler SWA gelieferte Versorgungsspannung um einen vorgebbaren Wert, so tritt ein Signal am Ausgang des ersten Komparators K1 auf, das ein Monoflop MOF anstößt, sodass an dessen Ausgang über eine bestimmte Zeitdauer T gleichfalls ein Signal s, anliegt.

Zur Regelung der von dem Tiefsetzsteller TSS gelieferten Spannung durch das Ansteuersignal sₐ, das durch Vergleich der an dem Kondensator C anliegenden Spannung - genauer eines durch den Spannungsteiler R2/R3 bestimmten Teiles davon - mit der tatsächlichen Lastspannung - auch hier eines durch einen Spannungsteiler R4/R5 bestimmten Teiles - gewonnen wird. Der Ausgang des zweiten Komparators K2 ist, nachdem er über einen Wiederstand R7 geführt ist, über einen gesteuerten Schalter S2 im Ruhezustand der Schaltung auf Masse gelegt. Die Serienschaltung eines Widerstandes R6 und eines Kondensators C6 liegt im Gegenkopplungszweig des Komparators K2.

Solange die Spannung an der Last ihren Sollwert aufweist, sind somit die Schalter S1 und S2 im Ruhezustand, d. h. geschlossen. Der Kondensator C ist über den Widerstand R1 an die Lastspannung gelegt und das Ansteuersignal sₐ ist Null. Der Pulsweitenmodulator PWM und somit der Tiefsetzsteller TSS befinden sich im Ruhezustand.

Schaltet der Komparator K1 bei dem genannten Absinken der Spannung an den Klemmen a, b jedoch um, so wird einerseits der Kondensator C über den Schalter S1 von der Last LAS getrennt, sodass seine Spannung im wesentlichen ungeändert bleibt, und andererseits wird durch den Schalter S2 das Ansteuersignal sₐ freigegeben, über welches nun der Tiefsetzsteller TSS dadurch geregelt wird, dass das Tasterverhältnis im Pulsweitenmodulator PWM dem Vergleich der Ausgangsspannung des Tiefsetzstellers TSS - an den Klemmen a, b - mit der im Kondensator C gespeicherten Spannung entsprechend geändert wird. Eingangsspannung des Tiefsetzstellers ist dabei die an dem Pufferkondensator Cₚ anliegende Spannung U_{H}. Der Verbraucher, hier die Last LAS, wird nun aus dem Pufferkondensator Cₚ über den Tiefsetzsteller Tss mit Energie versorgt, wobei der Pufferkondensator Cₚ so bemessen ist, dass dem Verbraucher Zeit genug bleibt, um beispielsweise Daten zu sichern. Bei einer Ausgangsspannung des Hochsetzstellers von z. B. 200 Volt besitzt der Pufferkondensator Cₚ eine Kapazität beispielsweise von einigen mF.

Bei dem vorhin beschriebenen Ausführungsbeispiel erfolgt die Abgabe des Ansteuersignals sₐ bei Störungen der Versorgungsspannung für eine feste Zeit, z. B. von 200 ms, die hier durch das Monoflop vorgegeben ist.

Es ist jedoch auch möglich, die Spannung an dem Pufferkondensator Cₚ zu messen, was in Fig. 1 strichliert durch ein Messsignal sₘ angedeutet ist, welches der Ansteuerschaltung AST zugeführt ist. Bei Entladung des Pufferkondensators auf eine bestimmte Grenzspannung wird eine Änderung des Speicherwertes in dem Kondensator C durch Schließen des Schalters S1 wieder zugelassen. Falls anstelle des Kondensators C ein digitaler Speicher verwendet wird, kann ein entsprechendes Steuerbit gesetzt bzw. gelöscht werden.

Weiters ist es möglich, den ersten Komparator K1 mit einer Hysterese auszustatten, sodass er erst einschaltet, wenn die Spannung um einen bestimmten Prozentsatz gesunken ist und ausschaltet, wenn der Speicherwert wieder erreicht wird. In diesem Fall ist es sinnvoll, den zweiten Komparator K2, der genauer gesagt ein Differenzverstärker ist, so zu beschalten, dass er auch eine Spannung regelt, die etwas geringer als die Lastspannung ist. Bei A6 sinken der Lastspannung von z. B. 26 Volt auf einen bestimmten Schwellwert, z. B. 25 Volt, liefert die Pufferschaltung eine Spannung, die unkritisch kleiner ist als die vorangegangene, z. B. 25,8 Volt. Dadurch kann die Pufferschaltung abgelöst werden, sobald die eigentliche Stromversorgung wieder Energie liefern kann.

Wie bereits oben angedeutet, kann anstellt des Speicherkondensators C ein digitaler Speicher vorgesehen sein. Gegebenenfalls kann es sinnvoll sein, auch andere Schaltungsteile digital bzw. mikroprozessorgesteuert auszuführen, doch bleibt die nähere Ausgestaltung im Rahmen der Erfindung dem Fachmann überlassen.

Wenn im Zusammenhang mit der Erfindung von "einem" oder "dem" Pufferkondensator die Rede ist, so soll dies natürlich die praxisnahe Parallel- und/oder Serienschaltung mehrerer Kondensatoren miteinschließen.

## Patentansprüche

1. Pufferschaltung für eine von der Versorgungsgleichspannung (U_{V}) zu speisende Last (LAS), mit einem Pufferkondensator (Cp), der von einer Ladeschaltung (HSS) auf eine Spannung (U_{H}) aufladbar ist, die höher als die Versorgungsgleichspannung ist, und der bei Einbrüchen der Versorgungsspannung über eine Entladeschaltung (TSS) zur Versorgung der Last heranziehbar ist,
**dadurch gekennzeichnet, dass**
der Eingang eines Tiefsetzstellers (TSS), an dem Pufferkondensator (Cp) und sein Ausgang an der Last (LAS) liegt, der Tiefsetzsteller über eine Ansteuerschaltung (AST) steuerbar ist, die einen Speicher (C) zur verzögerten Speicherung des Wertes der Versorgungsspannung (U_{V}) sowie zumindest einen Komparator (K1, K2) zum Vergleich der augenblicklichen Versorgungsspannung mit deren verzögert abgespeichertem Wert aufweist, und die dazu eingerichtet ist, bei Absinken der augenblicklichen Versorgungsspannung um eine vorgebbare Differenz unter den abgespeicherten Wert ein Ansteuersignal (sₐ) an den Tiefsetzsteller (TSS) abzugeben, um den Pufferbetrieb einzuleiten.

2. Pufferschaltung nach Anspruch 1, **dadurch gekennzeichnet, dass** das Ansteuersignal (sₐ) auch Regelsignal für einen Pulsweitenmodulator (PWM) des Tiefsetzstellers (TSS) ist.

3. Pufferschaltung nach Anspruch 1 oder 2, **dadurch gekennzeichnet, dass** bei Aktivierung des Pufferbetriebes der in dem Speicher (C) gespeicherte Wert unabhängig von der Versorgungsspannung (U_{V}) gehalten wird.

4. Pufferschaltung nach einem der Ansprüche 1 bis 3, **dadurch gekennzeichnet, dass** der Speicher als über einen Widerstand (R1) von der Versorgungsspannung (U_{V}) aufladbaren Kondensator (C) ausgebildet ist.

5. Pufferschaltung nach Anspruch 3 und Anspruch 4, **dadurch gekennzeichnet, dass** der Kondensator (C) über einen von einem ersten Komparator (K1) gesteuerten Schalter (S1) aufladbar ist, welcher bei Aktivierung des Pufferbetriebes öffnet.

6. Pufferschaltung nach einem der Ansprüche 1 bis 3, **dadurch gekennzeichnet, dass** der Speicher ein digitaler Speicher ist.

7. Pufferschaltung nach einem der Ansprüche 1 bis 6, **dadurch gekennzeichnet, dass** ein Zeitglied (MOF) vorgesehen ist, welches den Pufferbetrieb auf eine vorgebbare Zeitdauer begrenzt.

8. Pufferschaltung nach Anspruch 7, **dadurch gekennzeichnet, dass** das Zeitglied als dem Ausgang des ersten Komparators (K1) nachgeordneter Monoflop (MOF) ausgebildet ist.

9. Pufferschaltung nach einem der Ansprüche 1 bis 8, **dadurch gekennzeichnet, dass** die Ansteuerschaltung (AST) zur Erfassung der Spannung (U_{H}) an dem Pufferkondensator (Cp) eingerichtet ist, sowie dazu, bei Abfall dieser Spannung auf einen vorgebbaren Grenzwert den Pufferbetrieb zu beenden.

10. Pufferschaltung nach einem der Ansprüche 1 bis 9, **dadurch gekennzeichnet, dass** die Ausgangsspannung des Tiefsetzstellers (TSS) auf einen Wert regelbar ist, der geringfügig unter dem abgespeicherten Wert der Versorgungsspannung (U_{V}) liegt.

## Claims

1. Buffer circuit for a load (LAS) which is to be supplied by the supply direct voltage (U_{V}), having a buffer capacitor (C_{P}) which can be charged by a charging circuit (HSS) to a voltage (U_{H}) which is higher than the supply direct voltage, and which capacitor can be used to supply the load in the event of interruptions in the supply voltage via a discharging circuit (TSS),
**characterised in that**
the input of a buck-converter (TSS) is connected to the buffer capacitor (C_{P}) and its output is connected to the load (LAS), the buck-converter can be controlled via a control circuit (AST) which has a memory (C) for delayed storage of the value of the supply voltage (U_{V}) and at least one comparator (K1, K2) to compare the momentary supply voltage with the value thereof stored in a delayed manner, and which is arranged to output a control signal (sₐ) to the buck-converter (TSS) in order to initiate the buffer operation if the momentary supply voltage falls by a predeterminable difference below the stored value.

2. Buffer circuit as claimed in claim 1, **characterised in that** the control signal (sₐ) is also an adjusting signal for a pulse width modulator (PWM) of the buck-converter (TSS).

3. Buffer circuit as claimed in claim 1 or 2, **characterised in that** upon activation of the buffer operation the value stored in the memory (C) is held independently of the supply voltage (U_{V}).

4. Buffer circuit as claimed in any one of claims 1 to 3, **characterised in that** the memory is formed as a capacitor (C) which can be charged by the supply voltage (U_{V}) via a resistor (R1).

5. Buffer circuit as claimed in claim 3 and claim 4, **characterised in that** the capacitor (C) can be charged via a switch (S1) which is controlled by a first comparator (K1) and which opens upon activation of buffer operation.

6. Buffer circuit as claimed in any one of claims 1 to 3, **characterised in that** the memory is a digital memory.

7. Buffer circuit as claimed in any one of claims 1 to 6, **characterised in that** a timing member (MOF) is provided which limits the buffer operation to a predeterminable duration.

8. Buffer circuit as claimed in claim 7, **characterised in that** the timing member is formed as a monoflop (MOF) connected downstream of the output of the first comparator (K1).

9. Buffer circuit as claimed in any one of claims 1 to 8, **characterised in that** the control circuit (AST) is arranged to pick up the voltage (U_{H}) at the buffer capacitor (C_{P}) and in order to terminate the buffer operation if this voltage drops to a predeterminable limit value.

10. Buffer circuit as claimed in any one of claims 1 to 9, **characterised in that** the output voltage of the buck-converter (TSS) can be adjusted to a value which lies slightly below the stored value of the supply voltage (U_{V}).

## Revendications

1. Circuit tampon pour une charge (LAS) à alimenter par la tension continue d'alimentation (U_{V}), avec un condensateur tampon (Cp) qui peut être chargé par un circuit de charge (HSS) à une tension (U_{H}) plus élevée que la tension continue d'alimentation et qui peut être utilisé pour l'alimentation de la charge par l'intermédiaire d'un circuit de décharge (TSS) en cas de chutes de la tension d'alimentation, **caractérisé en ce que** l'entrée d'un élément de commande d'abaissement (TSS) est raccordée au condensateur tampon (Cp) et sa sortie est raccordée à la charge (LAS) et **en ce que** l'élément de commande d'abaissement peut être commandé par l'intermédiaire d'un circuit d'activation (AST), qui comprend une mémoire (C) pour la mémorisation retardée de la valeur de la tension d'alimentation (U_{V}) ainsi qu'au moins un comparateur (K1, K2) pour comparer la tension d'alimentation du moment avec sa valeur mémorisée avec un retard et qui est équipé pour, en cas d'abaissement de la tension d'alimentation du moment de la valeur d'une différence pouvant être prédéterminée en dessous de la valeur mémorisée, transmettre à l'élément de commande d'abaissement (TSS) un signal d'activation (Sₐ) pour mettre en route le mode de fonctionnement en tant que tampon.

2. Circuit tampon selon la revendication 1, **caractérisé en ce que** le signal d'activation (Sₐ) constitue aussi un signal de régulation pour un modulateur de largeur d'impulsion (PWM) de l'élément de commande d'abaissement (TSS).

3. Circuit tampon selon la revendication 1 ou 2, **caractérisé en ce qu'**en cas d'activation du mode de fonctionnement en tant que tampon, la valeur mémorisée dans la mémoire (C) est maintenue indépendante de la tension d'alimentation (U_{V}).

4. Circuit tampon selon l'une quelconque des revendications 1 à 3, **caractérisé en ce que** la mémoire est configurée comme condensateur (C) pouvant être chargé par l'intermédiaire d'une résistance (R1) par la tension d'alimentation (U_{V}).

5. Circuit tampon selon la revendication 3 et la revendication 4, **caractérisé en ce que** le condensateur (C) peut être chargé par l'intermédiaire d'un commutateur (S1) qui est commandé par un premier comparateur (K1) et qui ouvre lors de l'activation du mode de fonctionnement en tant que tampon.

6. Circuit tampon selon l'une quelconque des revendications 1 à 3, **caractérisé en ce que** la mémoire est une mémoire digitale.

7. Circuit tampon selon l'une quelconque des revendications 1 à 6, **caractérisé en ce qu'**il est prévu un élément de temporisation (MOF) qui limite le mode de fonctionnement en tant que tampon à une durée pouvant être prédéterminée.

8. Circuit tampon selon la revendication 7, **caractérisé en ce que** l'élément de temporisation est configuré comme bascule monostable (MOF) disposée derrière la sortie du premier comparateur (K1).

9. Circuit tampon selon l'une quelconque des revendications 1 à 8, **caractérisé en ce que** le circuit d'activation (AST) est équipé pour la saisie de la tension (U_{H}) au condensateur tampon (Cp) ainsi que pour mettre fin au mode de fonctionnement en tant que tampon en cas de baisse de cette tension à une valeur limite pouvant être prédéterminée.

10. Circuit tampon selon l'une quelconque des revendications 1 à 9, **caractérisé en ce que** la tension de sortie de l'élément de commande d'abaissement (TSS) peut être réglée à une valeur qui se situe légèrement en dessous de la valeur mémorisée de la tension d'alimentation (U_{V}).
